# FASCICULE DE BREVET EUROPEEN

(11) **EP 0 724 763 B1**
(45) Date de publication et mention de la délivrance du brevet: **29.07.1998**
(21) Numéro de dépôt: 94931076.7
(22) Date de dépôt: 18.10.1994
(51) Int. Cl.: G21D 1/00, G21C 19/36, B02C 18/02

(54) **PROCEDE ET DISPOSITIF DE DECOUPE PAR CISAILLEMENT D'ELEMENTS D'UNE INSTALLATION NUCLEAIRE**
VERFAHREN UND VORRICHTUNG ZUM SCHNEIDEN VON KERNKRAFTWERKSELEMENTEN
METHOD AND DEVICE FOR SHEARING ELEMENTS OF A NUCLEAR PLANT

(30) Priorité: 19.10.1993 FR 9312441
(43) Date de publication de la demande: 07.08.1996
(73) Titulaire: COMPAGNIE GENERALE DES MATIERES NUCLEAIRES, F-78140 Velizy Villacoublay (FR)
(72) Inventeur: SCHULTZ, Jean-Claude, F-50120 Equeurdreville (FR)
(74) Mandataire: Signore, Robert
(86) Numéro de dépôt international: FR9401203
(87) Numéro de publication internationale: WO9511510

(56) Documents cités:
- EP-A- 0 094 883
- EP-A- 0 347 312
- EP-A- 0 374 334
- WO-A-79/00218
- GB-A- 2 187 425

## Description

La présente invention concerne la découpe par cisaillement d'éléments entrant dans la constitution d'une installation nucléaire. Elle s'applique particulièrement à la découpe des pots de fusion.

Le démantèlement des installations nucléaires est un problème qui préoccupe particulièrement les autorités responsables de la sûreté et de la protection nucléaire ainsi que les exploitants nucléaires. Depuis quelques dizaines d'années, de nombreux moyens de démantèlement ont été mis en oeuvre et l'expérience a montré qu'il est nécessaire d'améliorer les équipements de démantèlement existants ou même d'en créer de nouveaux. De nombreux pays ont d'ailleurs mis en route des programmes de recherche et développement à ce sujet.

Les installations nucléaires étant de types et de tailles différents, il est nécessaire de disposer d'une grande variété de moyens pour réaliser les opérations de démantèlement. Celles-ci sont effectuées généralement par découpe au moyen de l'un des nombreux procédés existants : thermiques, électrothermiques, pyrotechniques, mécaniques, etc.

Le choix d'un procédé de découpe se fait en fonction de nombreux critères : efficacité de la découpe, son coût, les contraintes de mise en oeuvre, le degré de nuisances émises, le matériau à découper.

Il est connu de pratiquer une découpe mécanique par scie circulaire, scie alternative, disque, câble et meule abrasifs, jet d'eau à haute pression avec ou sans abrasif, outils de coupe par alésage. Le poids et l'encombrement de ces outils les rendent difficilement télémanipulables.

Certains constituants des installations nucléaires s'avèrent particulièrement difficiles à découper. Ceci peut être dû à la nature du matériau qui les compose, à leur épaisseur et à leur état. C'est notamment le cas des pots de fusion en alliage de nickel, de chrome et de fer, tel l'Inconel 601®, qui ont une épaisseur d'environ 10 mm. En outre, les pots de fusion usagés présentent un dépôt résiduel de verre sur leur paroi intérieure qui accroît la difficulté de découpe. Ceci fait qu'il est actuellement pratiquement impossible de découper ces pots. Des essais à la scie alternative ont permis de constater qu'il faut environ deux mois pour découper un tel pot.

La présente invention permet de remédier à ce problème en mettant en oeuvre un procédé de découpe nouveau dans les techniques de démantèlement, la découpe par cisaillement. Ce procédé et son application à un dispositif adapté pour recevoir des éléments d'installation nucléaire, ont permis une amélioration remarquable de l'efficacité de la découpe. Il faut d'ailleurs remarquer qu'une telle amélioration était a priori tout à fait inattendue. En effet, des essais de découpe par cisaillement de pots de fusion usagés en Inconel 601® ont montré qu'il suffisait de 24 heures pour découper un pot au lieu de deux mois avec la scie alternative, technique actuellement utilisée.

L'invention a donc pour objet un procédé de découpe par un outil de cisaillement d'un élément métallique entrant dans la constitution d'une installation nucléaire en vue de son démantèlement, cet élément métallique étant constitué d'un matériau difficile à découper, tel qu'un alliage de nickel du type Inconel®, et étant de forte épaisseur, caractérisé en ce qu'il comprend les étapes suivantes :
- présentation et maintien de l'élément devant le bord de coupe d'une lame constituant l'outil de cisaillement et qui est en position de travail, l'angle d'attaque de la lame étant d'environ 30°,
- simultanément, poussée de l'élément vers le bord de coupe et manoeuvre de l'outil pour effectuer une première opération de cisaillement de l'élément,
- à la fin de la première opération de cisaillement, dégagement de l'élément de l'outil de cisaillement et retour de l'outil en position de travail,
- éventuellement, répétition des étapes précédentes pour effectuer autant d'opérations de cisaillement qu'il est nécessaire.

L'invention a également pour objet un dispositif pour la mise en oeuvre du procédé défini ci-dessus, caractérisé en ce qu'il comprend un support pour la réception de l'élément, le support étant équipé d'une lame constituant l'outil de cisaillement et commandable par des moyens de commande, le dispositif comprenant aussi des moyens de maintien de l'élément devant le bord de coupe de la lame qui est incliné d'un angle d'environ 30° par rapport au support, des moyens de poussée de l'élément vers le bord de coupe de l'outil, des moyens de dégagement de l'élément de l'outil de cisaillement.

Avantageusement, l'outil de cisaillement est une lame traversant le support, la partie du support située en regard du bord de coupe servant de contre-lame.

La partie du support située en regard du bord de coupe de la lame peut être pourvue d'une pièce d'usure amovible. Ceci permet un échange rapide de la partie du support abîmée par l'opération de découpe.

La pièce d'usure peut être pourvue d'une fente permettant à la lame de traverser le support.

Pendant l'opération de cisaillement, si la lame est manoeuvrée perpendiculairement par rapport au support, son bord de coupe est de préférence incliné par rapport au support.

Les moyens de commande de la lame peuvent comprendre un vérin dont le piston est solidaire de manière amovible de la lame.

Avantageusement, les moyens de maintien, les moyens de dégagement et les moyens de poussée comprennent des butées commandées par des vérins.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue d'ensemble d'un dispositif de découpe par cisaillement selon l'invention,
- la figure 2 est une vue en coupe d'un détail du dispositif de découpe selon l'invention et illustrant les organes de commande de. l'outil de cisaillement,
- la figure 3 est une vue éclatée du détail du dispositif selon l'invention représentée à la figure 2,
- la figure 4 est une vue sous un autre angle du dispositif selon l'invention,
- la figure 5 est une vue de dessus partielle du dispositif selon l'invention.

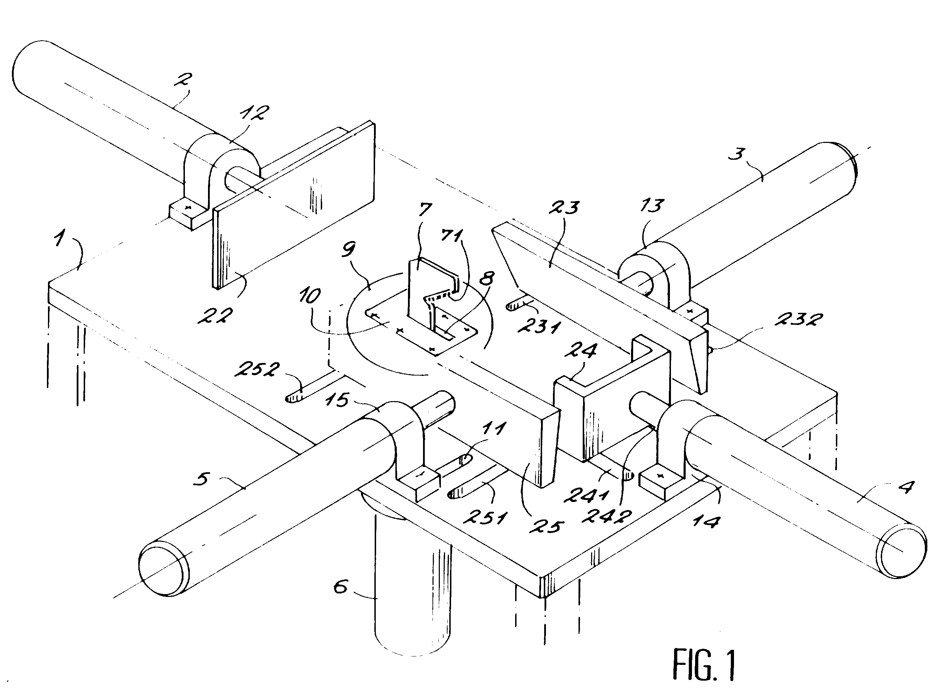

Le dispositif représenté à la figure 1 comporte une table 1 servant de support pour l'élément à cisailler. Quatre vérins 2, 3, 4 et 5, disposés orthogonalement entre eux sont fixés à la table 1 par des brides référencées respectivement 12, 13, 14 et 15. Ces quatre vérins peuvent avoir une course identique, par exemple 500 mm. Bien que non visibles sur la figure 1, le dispositif comporte encore une goulotte placée sous la table et un bac de récupération des copeaux produits lors de la découpe. Un vérin de coupe 6 est disposé sous la table et est maintenu perpendiculairement au plan de la table par deux broches. Le vérin de coupe 6 commande le déplacement de l'outil de cisaillement constitué ici par une lame 7 traversant la table 1 grâce à la présence de la fente 8 et présentant un bord de coupe 71.

Les vérins 3 et 5 commandent le déplacement des butées 23 et 25 qui sont parallèles à la lame 7 et qui servent au maintien de l'élément à cisailler. En fonction de la taille des éléments à découper, on placera les vérins 3 et 5 plus ou moins loin de l'axe de la table 1 passant par le plan de la lame, grâce à des fentes telle que celle référencée 11 qui permettent le passage des éléments de fixation des brides 13 et 15.

Les butées 23 et 25 sont guidées en translation par des fentes de guidage, telles celles référencées 231, 232, 251 et 252 grâce à des prolongements non visibles des butées pénétrant dans ces fentes.

Pour les vérins 3 et 5, la pression d'utilisation peut être de l'ordre de 30 bars.

Le vérin 4 sert à pousser l'élément à découper vers la lame 7. Il est représenté fixé à demeure sur la table 1 grâce à sa bride 14. Il pourrait aussi être réglable par rapport à la lame en disposant les éléments qui servent à la fixation de la bride dans les fentes 241 et 242 qui servent au guidage du patin de poussée 24. Ce patin de poussée 24 est moins large que les butées 23 et 25. Il a une forme en U et possède des prolongements non visibles pénétrant dans les fentes 241 et 242. La pression d'utilisation du vérin 4 peut être de 100 bars.

Le vérin 2 sert au recul de l'élément à découper lorsqu'une coupe a été effectuée et que la lame 7 est en position basse. Dans ce cas, la butée 22 solidaire de la tige du vérin 2 passe au-dessus de la lame. Le vérin 2 est représenté fixé à demeure sur la table mais pourrait éventuellement être déplaçable si la table était équipée de fentes comme pour les autres vérins. Il en est de même pour la butée 22 qui n'est pas ici guidée par des fentes de la table, sa fonction ne nécessitant pas une précision de déplacement de la qualité des autres systèmes de poussée et de maintien de l'élément à découper. La pression d'utilisation du vérin 2 peut être de l'ordre de 100 bars.

Les vérins 2, 3, 4 et 5 peuvent avantageusement être connectés à une centrale hydraulique à échangeurs huile/eau. Cette centrale permet l'enchaînement des opérations successives pour réaliser une découpe :
- maintien de l'élément à découper par les butées de maintien 23 et 25,
- poussée de l'élément à découper vers la lame 7 en position relevée grâce à la butée de poussée 24,
- découpe de l'élément par abaissement de la lame 7 tout en maintenant l'effort de poussée,
- recul de la butée de poussée et avance de la butée 22 pour dégager l'élément à découper et recommencer éventuellement le cycle de découpe.

La table possède une contre-lame 9 dans laquelle s'ajuste une pièce d'usure 10 amovible et interchangeable pourvue de la fente 8 permettant le passage de la lame 7. La contre-lame est de préférence en acier ayant subi une nitruration.

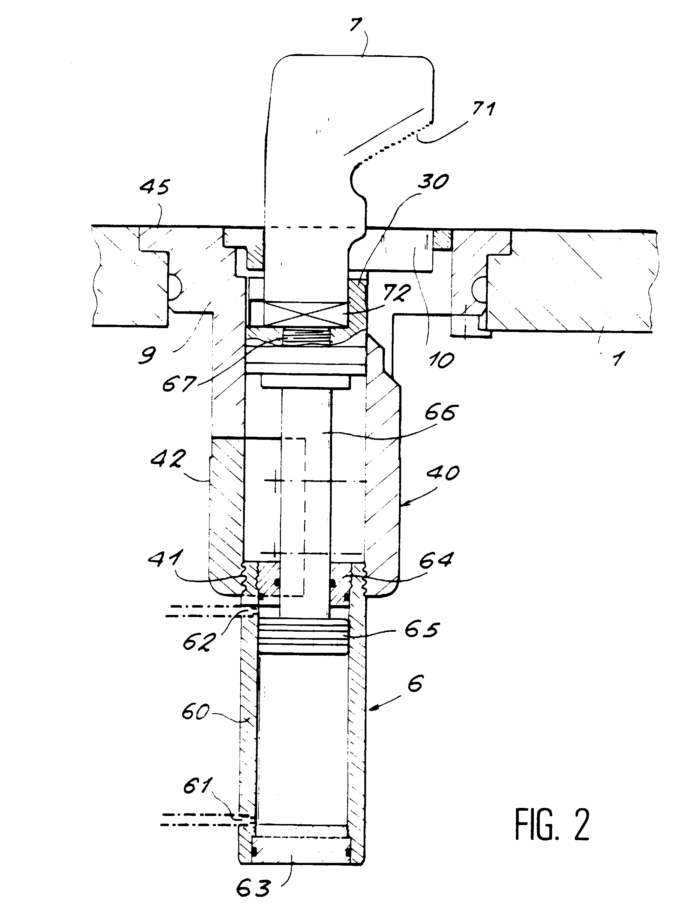

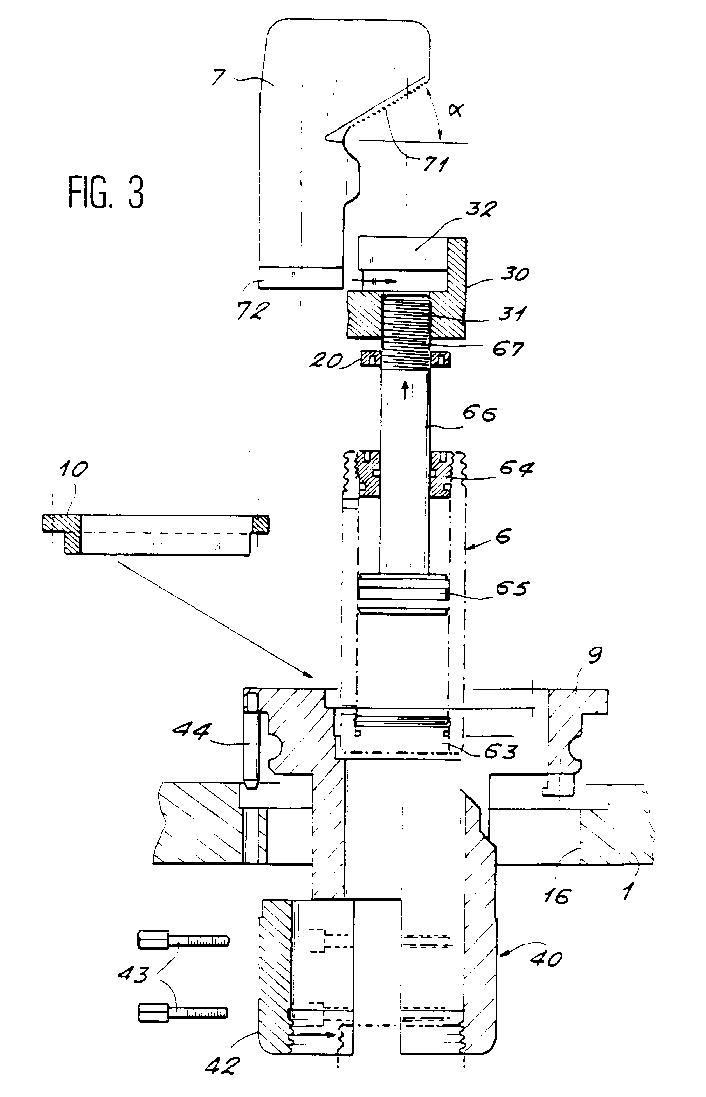

Les figures 2 et 3 illustrent les caractéristiques de la lame 7 et permettent de comprendre son fonctionnement.

Le vérin 6 est à double effet. Il possède un corps 60 équipé d'un orifice 61 d'arrivée de fluide pour extension et d'un orifice 62 d'arrivée de fluide pour rétraction. Ce fluide est par exemple de l'eau. Le vérin 6 est pourvu d'un bouchon de fermeture inférieur 63 et d'un bouchon de fermeture supérieur 64 entre lesquels peut se déplacer le piston 65. Ce piston 65 est prolongé par la tige 66 traversant le bouchon supérieur 64 et terminée par une partie filetée 67.

Une pièce de liaison 30 possède à sa partie inférieure un trou taraudé 31 permettant son assemblage sur la partie filetée 67 de la tige 66 avec interposition d'un contre-écrou 20. La partie supérieure de la pièce de liaison 30 est usinée en forme de mortaise 32.

La lame 7 possède une partie inférieure en forme de tenon 72. Cette partie en forme de tenon s'ajuste dans la partie en forme de mortaise de la pièce de liaison 30. Le vérin est alors capable d'actionner la lame 7 de haut en bas.

Le vérin 6 est, comme il a été dit plus haut, maintenu à la table 1 par deux broches non représentées. Son extrémité supérieure est rendue solidaire de la pièce 40 de forme généralement cylindrique et creuse, intermédiaire entre la table 1 et le vérin 6. Cette pièce 40 loge la tige 66 et la pièce de liaison 30. La liaison entre le vérin 6 et la pièce intermédiaire 40 est réalisée par emboîtement des deux pièces grâce à un système de rainures alternées 41. La partie inférieure de la pièce intermédiaire 40 comporte une coque demi-cylindrique 42 démontable. Lorsque la coque 42 est fixée sur la pièce intermédiaire 40 grâce aux vis 43, elle assure l'emboîtement du vérin 6 dans la pièce 40. Lorsque la coque 42 est retirée et que le vérin 6 est détaché des broches de fixation à la table 1, il est alors possible de pousser le vérin 6 vers la table de manière que la pièce de liaison 30 remonte et sorte de la partie supérieure de la pièce 40 (constituant la contre-lame 9). Il est alors possible de dégager la lame 7 et de la changer si elle est usée.

La pièce intermédiaire 40 se centre dans son logement 16 de la table 1 par des pions de centrage tels que le pion 44 (voir la figure 3). Elle est ensuite fixée à la table par une série de vis traversant sa couronne 45 de plus grand diamètre. La pièce intermédiaire 40 peut être réalisée en une seule partie. Elle peut aussi être réalisée en deux parties : la contre-lame 9 étant réalisée séparément et ensuite soudée sur la partie inférieure de la pièce 40. La contre-lame peut ainsi être nitrurée seule.

La pièce d'usure 10 a par exemple une forme rectangulaire. Sa fente 8 (voir la figure 1) est suffisamment longue pour que la lame 7 puisse y pénétrer. La pièce d'usure 10 est fixée par vissage périphérique sur la contre-lame 9. La face supérieure de l'ensemble constitué par la contre-lame et la pièce d'usure est dans le même plan que la face supérieure de la table 1.

La lame 7 est avantageusement en acier nickel-chrome-molybdène 60 NCD 11 commercialisé par la société Aubert et Duval. L'angle α d'attaque de la lame (voir la figure 3) doit être soigneusement déterminé. Des essais ont montré que cet angle devait être d'environ 30°. Le bord de coupe est de préférence légèrement dentelé.

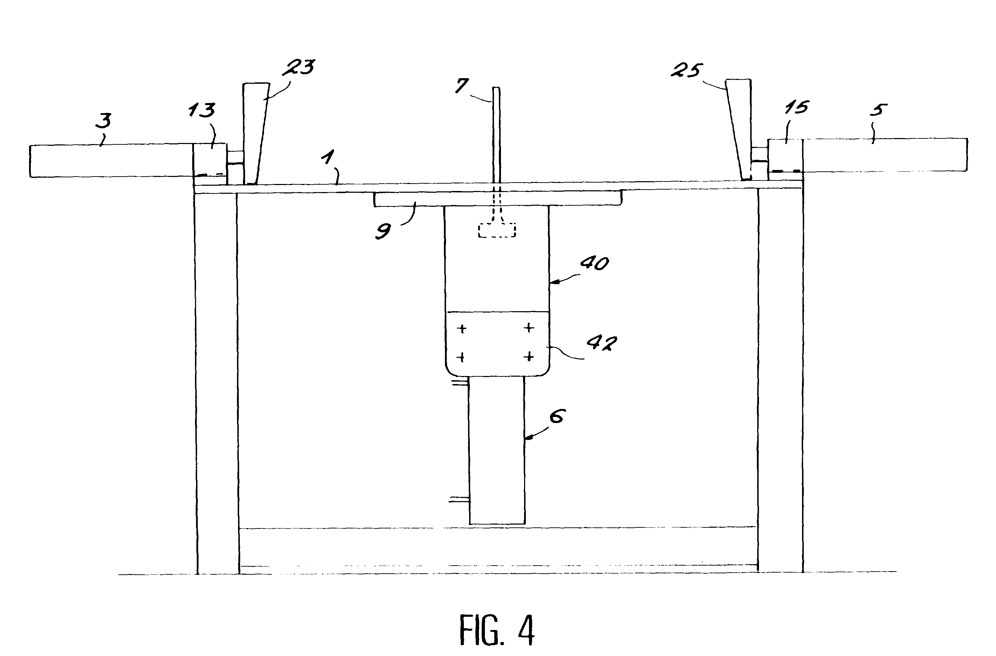

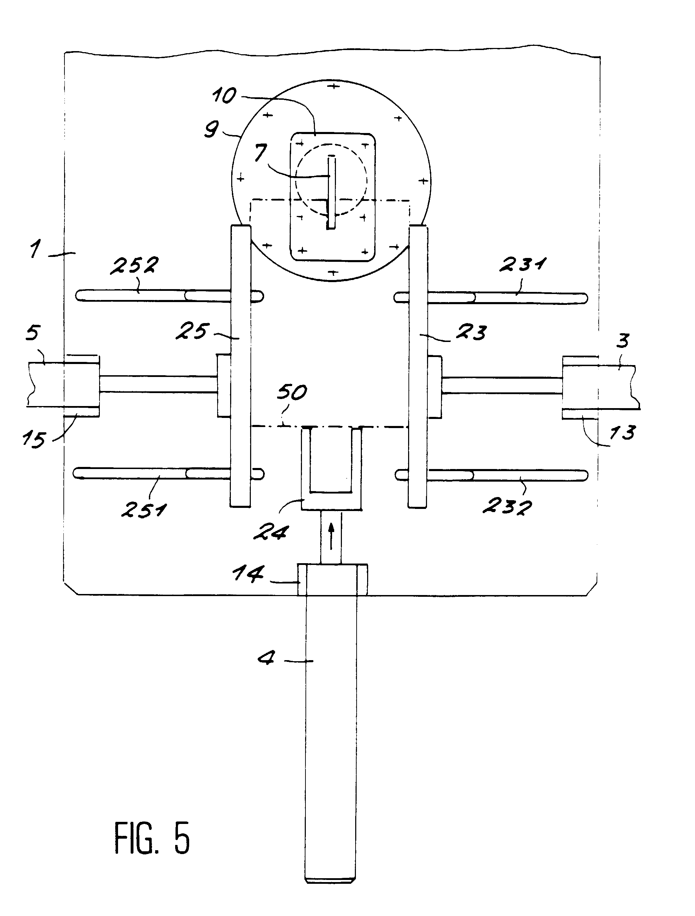

Les figures 4 et 5 représentent le dispositif selon l'invention sous d'autres angles pour une meilleure compréhension de l'invention. A la figure 5, on a figuré l'élément à découper 50 par son contour en traits mixtes.

Des essais ont été réalisés sur un demi-pot de fusion dont la paroi fait 10 mm d'épaisseur. Des coupes selon un pas de 80 mm ont été effectuées entre les ailettes du pot de fusion. Il est possible d'effectuer en 7 minutes (temps de manutention compris) une coupe de 400 mm de longueur sur ce pot de fusion.

La mise en place de l'élément à découper se fait à l'aide d'une unité de levage. Les vérins de centrage, d'avance et de recul de l'élément sont d'abord en position de retrait. Seul le vérin de la lame 7 est en position avancée, c'est-à-dire que la lame est sortie. Après avoir déposé l'élément à découper sur la table, les deux vérins latéraux 3 et 5 sont actionnés pour placer l'élément en position de découpe, c'est-à-dire pour que la lame se trouve entre deux ailettes si l'élément à découper est un pot de fusion.

Ensuite, le vérin 4 est actionné pour avancer l'élément sous la lame 7 qui est alors mise en action par le vérin 6 pour effectuer une première coupe. Lorsque cette première coupe est réalisée, la lame reste en position basse le temps que l'on dégage l'élément grâce au vérin 2. Une fois la butée 22 revenue en position de retrait, la lame est remise en position haute et le cycle de découpe peut recommencer.

## Revendications

1. Procédé de découpe par un outil de cisaillement d'un élément métallique entrant dans la constitution d'une installation nucléaire en vue de son démantèlement, cet élément métallique étant constitué d'un matériau difficile à découper, tel qu'un alliage de nickel du type Inconel®, et étant de forte épaisseur, caractérisé en ce qu'il comprend les étapes suivantes :
- présentation et maintien de l'élément devant le bord de coupe (71) d'une lame (7) constituant l'outil de cisaillement et qui est en position de travail, l'angle d'attaque (α) de la lame étant d'environ 30°,
- simultanément, poussée de l'élément vers le bord de coupe et manoeuvre de l'outil pour effectuer une première opération de cisaillement de l'élément,
- à la fin de la première opération de cisaillement, dégagement de l'élément de l'outil de cisaillement et retour de l'outil en position de travail,
- éventuellement, répétition des étapes précédentes pour effectuer autant d'opérations de cisaillement qu'il est nécessaire.

2. Dispositif pour la mise en oeuvre du procédé selon la revendication 1, caractérisé en ce qu'il comprend un support (1) pour la réception de l'élément, le support étant équipé d'une lame (7) constituant l'outil de cisaillement et commandable par des moyens de commande, le dispositif comprenant aussi des moyens de maintien de l'élément devant le bord de coupe (71) de la lame (7) qui est incliné d'un angle (α) d'environ 30° par rapport au support (1), des moyens de poussée de l'élément vers le bord de coupe de l'outil, des moyens de dégagement de l'élément de l'outil de cisaillement.

3. Dispositif selon la revendication 2, caractérisé en ce que la lame (7) traverse le support (1), la partie du support situé en regard du bord de coupe servant de contre-lame (9).

4. Dispositif selon la revendication 3, caractérisé en ce que ladite partie du support située en regard du bord de coupe est pourvue d'une pièce d'usure amovible (10).

5. Dispositif selon la revendication 4, caractérisé en ce que la pièce d'usure (10) est pourvue d'une fente (8) permettant à la lame de traverser le support (1).

6. Dispositif selon l'une quelconque des revendications 2 à 5, caractérisé en ce que les moyens de commande de la lame comprennent un vérin (6) dont la tige (66) est solidaire de manière amovible de la lame (7).

7. Dispositif selon la revendication 6, caractérisé en ce qu'une liaison du type tenon-mortaise (72, 32) est utilisée pour rendre la lame (7) solidaire de manière amovible de ladite tige (66) de vérin (6).

8. Dispositif selon l'une quelconque des revendications 2 à 7, caractérisé en ce que les moyens de maintien, les moyens de dégagement et les moyens de poussée comprennent des butées (22 à 25) commandées par des vérins (2 à 5).

9. Dispositif selon l'une quelconque des revendications 2 à 7, caractérisé en ce que le bord de coupe (71) de la lame (7) est dentelé.

## Patentansprüche

1. Verfahren zum Zerschneiden eines zu einem abzutragen-den Kernkraftwerk gehörendenden Metallelements mit einem Scherwerkzeug, wobei dieses Metallelement aus einem schwierig zu schneidenden Material besteht, z.B. einer Nickellegierung des Typs Inconel^{R}, und eine große Dicke aufweist,
**dadurch gekennzeichnet,**
daß es die folgenden Schritte umfaßt:
- Anbringen und Festhalten des Elements vor der Schneidkante (71) eines das Scherwerkzeug bildenden Schermessers (7), die in Arbeitsstellung ist, wobei der Wirk- bzw. Angreifwinkel (a) des Schermessers ungefähr 30° beträgt,
- simultanes Anpressen des Elements gegen die Schneidkante und Betätigen des Werkzeugs, um eine erste Scheroperation des Elements durchzuführen,
- Entfernen des Elements vom Scherwerkzeug am Ende dieser ersten Operation und Rückkehr des Werkzeugs in die Arbeitsstellung,
- eventuell den vorhergehenden Schritt wiederholen, um ebensoviele Scheroperationen wie nötig durchführen.

2. Vorrichtung zur Durchführung des Verfahrens nach Anspruch 1, dadurch gekennzeichnet, daß es einen Träger (1) zur Aufnahme des Elements umfaßt, wobei der Träger mit einem das Scherwerkzeug bildenden Schermesser (7) ausgerüstet ist, das durch Betätigungs- bzw. Steuereinrichtungen betätigt wird, und die Vorrichtung auch Einrichtungen zum Festhalten des Elements vor der Schneidkante (71) des Schermessers (7) umfaßt, die in bezug auf den Träger (1) um einen Winkel (a) von ungefähr 30° geneigt ist, sowie Einrichtungen zum Anpressen des Elements gegen die Schneidkante des Werkzeugs und Einrichtungen zum Entfernen des Elements von dem Scherwerkzeug.

3. Vorrichtung nach Anspruch 2, dadurch gekennzeichnet, daß das Schermesser (7) den Träger (1) durchquert, wobei das der Schneidkante gegenüberstehende Teil des Trägers als Gegenschermesser (9) dient.

4. Vorrichtung nach Anspruch 3, dadurch gekennzeichnet, daß das genannte, der Schneidkante gegenüberstehende Teil mit einem herausnehmbaren Verschleißteil (10) versehen ist.

5. Vorrichtung nach Anspruch 4, dadurch gekennzeichnet, daß das Verschleißteil (10) mit einem Schlitz (8) versehen ist, der dem Schermesser ermöglicht, den Träger (1) zu durchqueren.

6. Vorrichtung nach einem der Ansprüche 2 bis 5, dadurch gekennzeichnet, daß die Betätigungseinrichtungen des Schermessers einen Zylinder (6) umfassen, dessen Stange (66) auf lösbare Weise fest mit dem Schermesser (7) verbunden ist.

7. Vorrichtung nach Anspruch 6, dadurch gekennzeichnet, daß eine Verbindung des Typs Zapfen-Zapfenloch (72, 32) benutzt wird, um das Schermesser (7) auf lösbare Weise fest mit der genannten Stange (66) des Zylinders (6) zu verbinden.

8. Vorrichtung nach einem der Ansprüche 2 bis 7, dadurch gekennzeichnet, daß die Einrichtungen zum Festhalten, die Einrichtungen zum Entfernen und die Einrichtungen zum Anpressen Anschläge (22 bis 25) umfassen, die durch Zylinder 2 bis 5 betätigt werden.

9. Vorrichtung nach einem der Ansprüche 2 bis 7, dadurch gekennzeichnet, daß die Schneidkante (71) des Schermessers (7) gezahnt ist.

## Claims

1. Process for cutting up by means of a shearing tool a metal element used in the construction of a nuclear installation with a view to the dismantling thereof, said metal element being constituted by a material which is difficult to cut, such as a nickel alloy of the Inconel type and which is of considerable thickness, characterized in that it comprises the following stages:
- presentation and maintenance of the element in front of the cutting edge (71) of a blade (7) forming the shearing tool and which is in the working position, the pitch angle (α) of the blade being approximately 30°,
- simultaneously, pushing the element towards the cutting edge and manipulating the tool in order to perform a first element shearing operation,
- at the end of the first shearing operation, release of the element from the shearing tool and the return of said tool to the working position,
- optionally, repetition of the preceding stages in order to perform the necessary number of shearing operations.

2. Apparatus for performing the process according to claim 1, characterized in that it comprises a support (1) for receiving the element, the support being equipped with a blade (7) constituting the shearing tool and controllable by control means, the apparatus also incorporating means for maintaining the element in front of the cutting edge (71) of the blade (7), which is inclined by angle (α) of approximately 30° with respect to the support, means for pushing the element towards the cutting edge of the tool and means for the release of the element from the shearing tool.

3. Apparatus according to claim 2, characterized in that the blade (7) traverses the support (1), the portion of the support facing the cutting edge serving as a counterblade (9).

4. Apparatus according to claim 3, characterized in that the portion of the support facing the cutting edge is provided with a detachable wearing member (10).

5. Apparatus according to claim 4, characterized in that the wearing member (10) is provided with a slot (8) enabling the blade to pass through the support (1).

6. Apparatus according to any one of the claims 2 to 5, characterized in that the blade control means comprise a jack (6), whose rod (66) is detachably integral with the blade (7).

7. Apparatus according to claim 6, characterized in that a mortise and tenon-type connection (72, 32) is usable for rendering the blade (7) detachably integral with the rod (66) of jack (6).

8. Apparatus according to any one of the claims 2 to 7, characterized in that the maintaining means, release means and pushing means comprise abutments (22 to 25) controlled by jacks (2 to 5).

9. Apparatus according to any one of the claims 2 to 7, characterized in that the cutting edge (71) of the blade (7) is serrated.
